(19) Europäisches Patentamt

European Patent Office

Office européen des brevets

(11) **EP 0 909 394 B1**

(12) **EUROPEAN PATENT SPECIFICATION**

(45) Date of publication and mention
of the grant of the patent:
**01.09.2004 Bulletin 2004/36**

(51) Int Cl.⁷: **G01S 5/14**, G05D 1/02

(21) Application number: **98900090.6**

(86) International application number:
**PCT/FI1998/000011**

(22) Date of filing: **05.01.1998**

(87) International publication number:
**WO 1998/034127 (06.08.1998 Gazette 1998/31)**

(54) **AUTOMATIC GANTRY STEERING SYSTEM FOR A CONTAINER HANDLING MACHINE**

AUTOMATISCHES PORTALSTEUERUNGSSYSTEM FÜR CONTAINERVERLADEVORRICHTUNG

SYSTEME DE COMMANDE DE PONT-PORTIQUE AUTOMATIQUE DESTINE A UNE MACHINE
MANIPULANT DES CONTENEURS

(84) Designated Contracting States:
**DE ES FR GB IT**

(30) Priority: **13.01.1997 FI 970128**
**15.10.1997 FI 973960**

(43) Date of publication of application:
**21.04.1999 Bulletin 1999/16**

(73) Proprietor: **Kalmar Industries OY AB**
**33900 Tampere (FI)**

(72) Inventors:
• **RINTANEN, Kari**
**FIN-02340 Espoo (FI)**
• **HAUTAKANGAS, Marko**
**FIN-33840 Tampere (FI)**
• **PARVIAINEN, Keijo**
**FIN-36110 Ruutana (FI)**
• **RAAMI, Tuomo**
**FIN-36340 Tohkala (FI)**

(74) Representative: **Salonen, Esko Tapani et al**
**Forssén & Salomaa Oy,**
**Eerikinkatu 2**
**00100 Helsinki (FI)**

(56) References cited:
EP-A- 0 574 009          WO-A-91/09275
WO-A-91/09375           WO-A-95/31759
US-A- 5 646 630

**Description**

The invention concerns an automatic steering system for a container handling machine for the purpose of making a container handling machine, such as a mobile gantry crane, a straddle carrier, or equivalent, to move along straight lines determined by rows of containers or by a rail track or equivalent, which automatic steering system comprises a navigation system based on a satellite positioning system, which navigation system includes a stationary GPS apparatus mounted in a stationary ground station and mobile GPS apparatuses mounted on the container handling machines moving in the nearby area, which GPS apparatuses are fitted to receive signals from the satellites of the GPS system so as to determine the locations of the GPS apparatuses, as well as radio apparatuses mounted in the stationary ground station and on the mobile container handling machines so as to transmit a position-correcting signal from the radio transmitter of the stationary ground station to the mobile radio receivers of the container handling machines in order to steer the container handling machine to run along the desired running path in order to permit a transfer of containers.

In the following specification, a container handling machine is mainly understood. as a mobile gantry crane (Rubber Tyred Gantry Crane - RTG), which is used in ports and in inland terminals for transferring and stacking of containers and for loading and unloading of trucks, trailers, and trains. The invention can, however, also be applied equivalently to a straddle carrier for containers. Mobile gantry cranes are manufactured, in compliance with the requirements of the customer, as a number of different sizes, which are usually dimensioned so that, as a rule, 4...8 adjacent rows of containers can be fitted within the track gauge of the crane, into which rows the crane can stack 4...6 containers one above the other and one after the other as many as is permitted by the available space and by the logistic system. Within the track gauge of a mobile gantry crane, the row of containers placed extreme at the side is, as a rule, allowed to remain empty so that trucks that bring and fetch containers can run along this lane to the correct location. For example, in a typical mobile gantry crane, in which the track gauge of the crane accommodates six rows of containers plus a container handling lane and four containers one on top of the other in the vertical direction, the track gauge of the crane is of an order of 23 metres and the height 21 metres. Thus, the equipment is of very large size.

The frame construction of a mobile gantry crane (RTG) is such that, first, at each side of the crane, there are wheels, on whose support quite high support legs are mounted. At the top of the support legs, there is a bridge that interconnects the legs placed at each side of the crane. On the bridge, a trolley moving substantially in the lateral direction is mounted, which trolley is provided with a container grasping device, called spreader, which is suspended on hoisting cables on the trolley. In a terminal in which mobile gantry cranes are used, the rows of containers are usually placed in compliance with lines painted on the ground. The lines are usually painted based on laser measurement, so that the rows of containers are straight. In large ports and equivalent in which such equipment is used, the rows of containers are, as a rule, very long, for example of a length of about 300...400 metres.

In terminals in which mobile gantry cranes are used, the rows of containers are arranged as blocks, in which there is, as a rule, a certain number of rows of containers side by side, for example six rows of containers side by side, and in addition to them a container handling lane. When a container is being transferred into a stack in the desired location, in the first stage the container handling device is driven to the location in the block in which the container is supposed to be placed. After that the truck that brings the container drives, for example, along the container handling lane to the correct location to underneath the container handling machine, so that the spreader can grasp the container placed on the truck and lift the container off the truck platform. The container is hoisted to a sufficient height, after which the trolley is transferred towards the side to the location of the correct row of containers, where the container is lowered into its place. When a container is taken from the stack, the procedure is similar, but, of course, in the reversed sequence.

The control of a container handling machine, such as a mobile gantry crane, exclusively manually is difficult because of the large size of the machines and because it must be possible to drive the machine over long distances completely straight in quite narrow spaces. This is why, in view of driving a container handling machine straight above stacks of containers, various auxiliary means have been developed which steer the machine automatically so that the container handling machine runs precisely along a straight line above the stacks of containers. In such a case, typically, the operator of the machine determines the speed of the container handling machine, and the steering operates automatically by means of a computer or any other, equivalent controller.

As was stated above, there are several different types of auxiliary means intended for steering along a straight line, and the earliest auxiliary means of this sort operate by means of a guide wire installed in the ground, in which connection an antenna or antennas mounted on the mobile gantry crane measure(s) the location of the wire underneath the machine and steer the machine so that it remains on the wire. However, it is a drawback of such a system that the installing of the wire in the ground is laborious, and the wire may be damaged when the soil moves or is subjected to the effects of freezing and thawing. Also, when a new steering line is made or an old one is displaced, an abundance of installation work must be carried out and, therefore, the steering lines cannot be changed quickly.

Corresponding more recent auxiliary means include means, for example, of a type in which thin steel strips or corresponding metal plates have been screwed into the field, i.e. into the ground, at certain intervals, for example at a spacing of 5 metres. In such a case, the antennas fixed onto the mobile gantry crane measure the location of the metal plates always when the machine runs over a plate. The computer of the container handling machine steers the machine so that it can be made to follow the row of metal plates. Compared with that described first above, it is an advantage of such a system that it can be installed more readily, but even now the running lines cannot be changed without time-consuming installation work.

The more recent steering systems also include systems which operate by means of transponders mounted in the ground. In such a system, transponders are installed in holes that have been drilled into the ground at certain distances, for example at a spacing of 5 metres. The antenna or antennas mounted on the mobile gantry crane again measure(s) the location of the transponders always when the crane runs over such a transponder. In such a case, the computer steers the mobile gantry crane so that it follows the row of the transponders. This system also involves the same drawback as those described above, i.e. the installation work is laborious, and changing of the steering lines is slow.

A further prior-art gantry steering system is such that a strip has been painted onto the field of the terminal, i.e. onto the ground, which strip is observed by means of a camera. Thus, a camera attached to the crane observes the painted line placed below the crane and steers the crane so that it remains on the painted line. Also in such a system, a drawback is the slow changing of the steering lines, even though the painting of a new steering line can be carried out more quickly than, for example, installation of transponders into the ground. However, a major weakness and drawback of camera-based systems is their susceptibility of contamination, rain, snow, and difficult illumination conditions.

With respect to the prior art, reference is made to publications *WO 91/09375* and *WO 91/09275. WO 91/09375* discloses the application of differential GPS correction data for improving the accuracy in the measurement of the position of a vehicle equipped with a GPS receiver. A GPS-equipped base station transmits the computed biases to the vehicle using data radios. More specifically *WO 91/09375* discloses the use of a navigation system based on (GPS), including a GPS apparatus mounted in a stationary ground station and mobile GPS apparatuses mounted on the vehicles, for determining the locations of the GPS apparatuses. Further it discloses radio apparatuses mounted in the stationary ground station and on the vehicles so as to transmit a position-correcting signal from the radio transmitter of the stationary ground station to the mobile radio receivers of the vehicles in order to steer the vehicle to run along the desired running path. Moreover, *WO 91/09375* teaches the use of a sequence of linear segments (among other kinds of curves), each defined by two nodes, for representing the route to be followed by the vehicle.

*WO 91/09275* discloses another vehicle steering system using differential GPS correction data for improving the accuracy in the measurement of the position.

Reference is further made to publications *WO 94/02890, WO 95/31759*, *EP 679,975* and *EP 494,499.* Of these publications, WO 94/02890 describes a vehicle intended for transfer of containers and provided with automatic steering, whose control in a port area is based on signal poles that have been erected in the area and that reflect microwaves and on a map of the port area. It is one problem of this solution that fixed structures must be erected in the area of the port for the control. On the other hand, in the publication WO 95/31759, an unmanned tractor is described, whose control is based on a digitized map of the working area programmed in advance in the control system and on the use of a satellite positioning system. A drawback is the complicated nature of the system. The publication EP 679,975 describes a highly complicated system for the control of an unmanned vehicle while making use of a satellite positioning system, and the publication EP 494,499 describes monitoring of the running of a vehicle by means of a satellite positioning system.

The object of the present invention is to provide an automatic steering system of a novel type for a container handling machine, which system does not involve the weaknesses and drawbacks which were described above and which are peculiar of the prior-art systems and by means of which system a considerable improvement is achieved in comparison with existing systems.

In view of achieving the objectives, the invention is mainly characterized in that, in order to avoid the wear grooves arising from the wheels of the container handling devices on the steering lines in the terminal field, the steering system of the container handling machine has been arranged, by means of programming, in stead of one steering line, to employ two or more steering lines placed side by side, within the scope of the width of the available steering lane.

In such a case, it is preferable to arrange the steering system to change the steering line automatically at desired intervals.

The system in accordance with the invention for measurement of the direction and the position of the container handling machine can be used as a system of positioning and locating of individual containers.

In such a case, according to a further embodiment, the automatic steering of the container handling machine has been arranged to locate the trolley or the side-shift mechanism of the container handling machine in the correct location in order to pick up or to stack a container by making use of information concerning the precise xy location of the container stored in the memory and by making use of information concerning the xy location of the container handling machine measured by the navigation system. According to an embodiment, a combination of the above last-mentioned two embodiments is used.

The system can be provided with a computer, by whose means the steering and control of the container handling machines can be performed fully automatically without manual control. It may, however, be advisable that the container handling machines are additionally provided with manual control and operating means.

By means of the invention, a significant advantage is provided over the prior-art solutions, and as one concrete advantage should be mentioned the defining of new steering lines without any installation work or painting whatsoever to be applied to the container field. By means of the system in accordance with the invention, a highly accurate steering of a container handling machine is achieved, and further, by means of the system in accordance with the invention, at the same time, it is possible to control a large, non-preset number of container handling machines. Formation of grooves in the steering lines can be reduced substantially, compared with the prior art, in which case the necessity of renewing the pavement is substantially less frequent than earlier. The further advantages and characteristic, features of the invention will come out from the following detailed description of the invention.

In the following, the invention will be described by way of example with reference to the figures in the accompanying drawing.

Figure 1A is a side view of a mobile gantry crane (Rubber Tyred Gantry Crane - RTG) to which the automatic steering system in accordance with the invention can be applied.

Figure 1B shows a mobile gantry crane (Rubber Tyred Gantry Crane - RTG) as shown in Fig. 1A viewed in the running direction.

Figure 2 is a fully schematic illustration of a preferred embodiment of a steering system in accordance with the invention.

Figures 3...6 illustrate various operations of the automatic steering system in accordance with the invention in the form of block diagrams.

Figures 7A and 7B illustrate the way in which formation of grooves in the terminal area or in the container field can be reduced substantially.

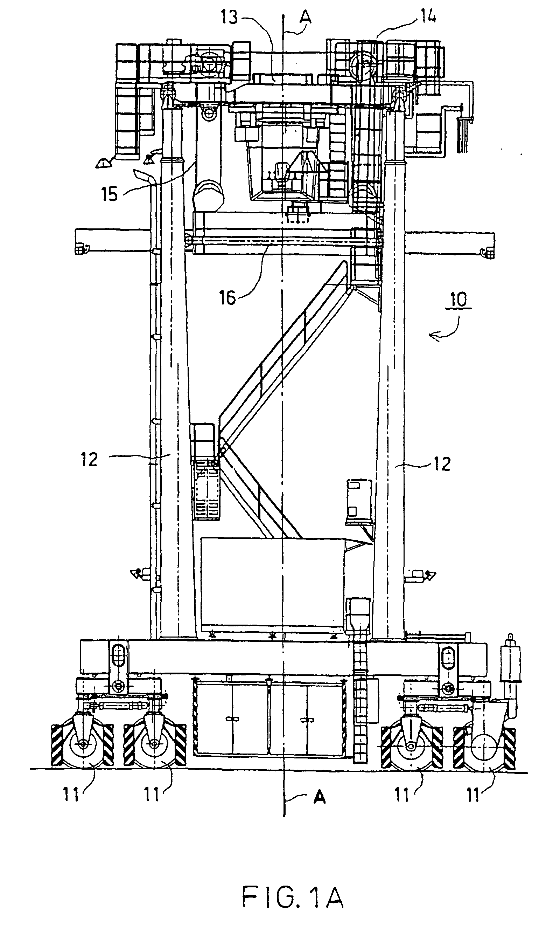

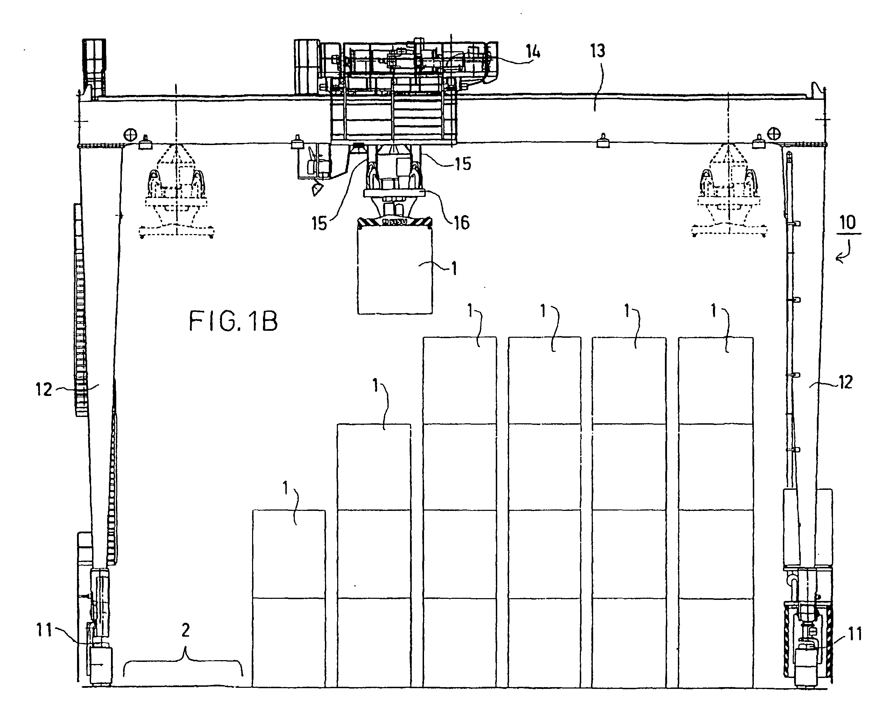

The container handling machine shown in Figs. 1A and 1B is a mobile gantry crane 10 (Rubber Tyred Gantry Crane - RTG), which comprises wheels 11 fitted at each side of the machine, which wheels support substantially vertical support legs 12. At the top end of the support legs 12, a cross-direction bridge 13 has been installed, which interconnects said support legs 12 placed at both sides of the machine. On support of the bridge 13, a trolley 14 is mounted, which can move along the bridge 13 in the cross direction of the machine 10. On the trolley 14, by means of hoisting cables 15, a spreader 16 is suspended, which is displaceable in the vertical direction and by whose means the containers are grasped in view of transferring them. Fig. 1B illustrates in particular the way in which the containers are stacked in the terminal area in a number of rows placed side by side, the number of said rows being, in the case of Fig. 1B, six adjacent rows in each block. The rows of containers form a block so that each block further includes a free container handling lane 2. The container handling machine 10 operates above the rows of containers so that the wheels 11 placed at each side of the machine run at each side of the block while the rows of containers and the container handling lane 2 remain between the wheels 11 and the support legs 12. Even though, in the following description, the system in accordance with the invention is described expressly as applied to a mobile gantry crane as shown in Figs. 1A and 1B, the system can also be utilized, for example, for the steering of a straddle carrier for containers, of a size smaller than the device described above.

A straddle carrier for containers and ports that employ straddle carriers, differ from mobile gantry cranes so that a straddle carrier stacks containers in one row only and typically just 2 or 3 containers one on top of the other. Between the rows of containers, there is free space so that the straddle carrier can run on each row. Also, a straddle carrier itself carries and transfers containers over long distances and does not require trucks or trailers to assist in its operation.

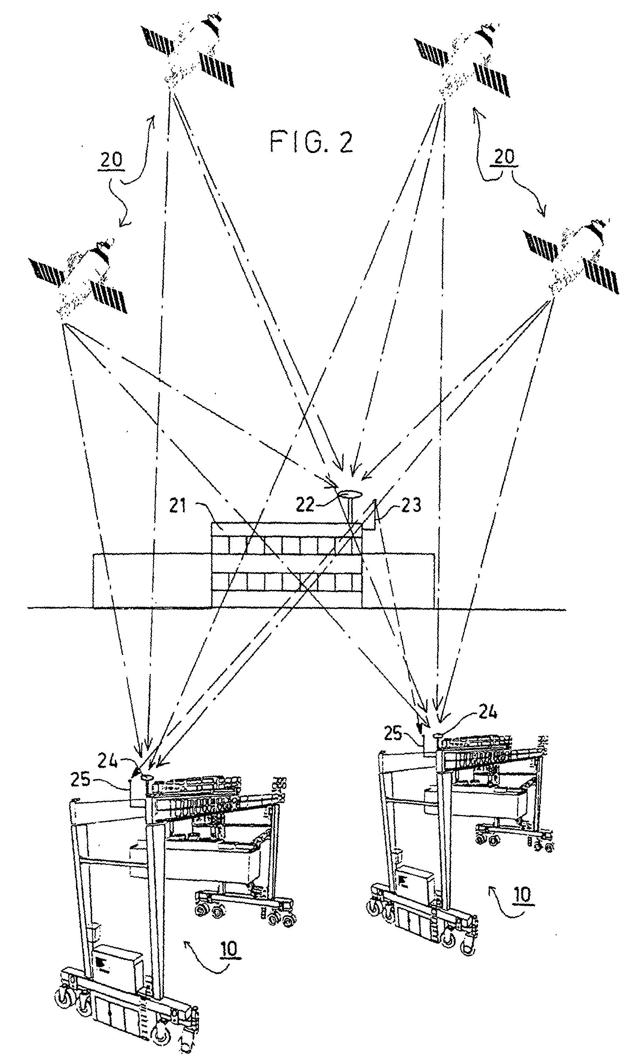

The location and preferably also the heading or direction of the container handling machine 10 in the terminal area is determined by means of a navigation equipment, by whose means at least the straight-line steering of the container handling machine is controlled at the rows of containers and the units composed of said rows. A navigation equipment can be carried into effect in a number of different alternative ways, but it will be possible to consider a navigation equipment based on a satellite positioning system to be the preferred embodiment of a navigation equipment, and attempts are made to illustrate said equipment schematically by means of Fig. 2.

As is well known, the satellite positioning system (GPS) is based on Navstar satellites circulating around the globe, and the total number of said satellites is about 24. These satellites, four of which are illustrated schematically in Fig. 2 and denoted with the reference numeral 20, transmit a code, which is received by the satellite positioning device, for which the designation GPS device will be used in the following description. The GPS device utilizes at least four satellites at the same time, and by means of the device the distances from said satellites are measured, and the heading of the antenna of the GPS device in the XYZ system of coordinates is determined by means of the principle of triangulation. As is shown in Fig. 2, GPS devices 24 with antennas have been installed on each container handling machine 10, and, moreover, on the ground station 21 (for example, terminal building or a corresponding structure placed in the nearby area), a corresponding GPS device 22 with antenna is installed, which device is, thus, stationary. The accuracy of the GPS position determination has been improved essentially by means of a differential technique, which expressly utilizes the GPS device 22 placed at the stationary ground station 21, in addition to the mobile GPS devices 24.

The operation of the system as shown in Fig. 2 is substantially as follows. The satellites 20 transmit a code constantly through the day and night, as was already explained above. The mobile GPS devices installed on the container handling machines 10 receive the signals transmitted by at least four satellites, and the positions of the mobile GPS devices 24 are determined based on these signals. The signals transmitted by the same four satellites 20 are also received by the GPS device 22 of the stationary ground station 21, and the position of the stationary GPS device 22 is determined by means of computing on the basis of these signals. Since the position of the stationary GPS device 22 is known precisely, on this basis it is possible to determine the error that is involved in the determination of position based on the signals arriving from the satellites 20. Since the distance between the stationary GPS device 22 and the mobile GPS devices 24 in relation to the distance between the satellites 20 and the stationary GPS device 22 is negligibly little, the error involved in the signals received by the GPS devices 24 can be considered to be the same as the error in the case of the stationary GPS device 22. Further, on the stationary ground station 21 and on the container handling machines 10, radio apparatuses, e.g. radio modems, and connected radio antennas 23,25 have been installed, and by their means the correction signals for determination of the position are transmitted from the ground station 21 to the container handling machines 10. The accuracy of the GPS position determination has been improved additionally to a substantial extent by means of a technique of measurement of the phase of the carrier wave, by whose means the precision of the GPS measurement can be improved to an order of magnitude of a centimetre. In such a case, the GPS device installed on the ground station and the mobile GPS devices compare also the carrier waves of the GPS signals with each other, on the basis of which comparison the ultimate precision adjustment of the determination of the position is carried out. Devices that employ this technique are designated as RTK (Real Time Kinematic) GPS.

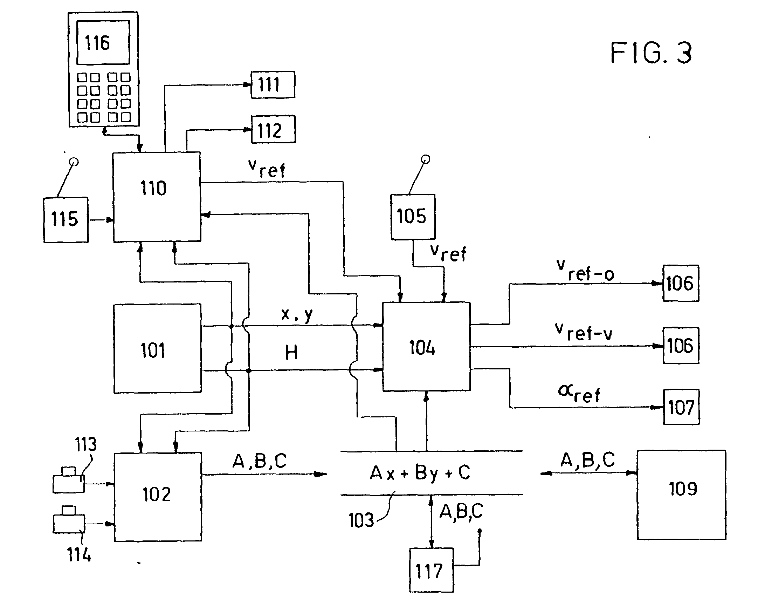

Thus, the stationary ground station 21 comprises a control unit, which includes a GPS device and a connected antenna 22 and a radio modem or a corresponding radio transmitter/receiver apparatus and a connected antenna 23. Corresponding devices are also fitted on the container handling machines 10. Thus, the correction signal is transmitted from the ground station 21 to the container handling machines 10 as a radio signal, and the radio frequency that is used is a different radio frequency specific of each terminal. Further, the container handling machines 10 include a computer or an equivalent programming device connected to the control unit as well as necessary actuators and drive gear for controlling the wheels of the container handling machine. The solution illustrated in Fig. 2 is quite schematic and simplified, and a more detailed description of the system and of its operation will be given in the form of block diagrams in Figs. 3...6.

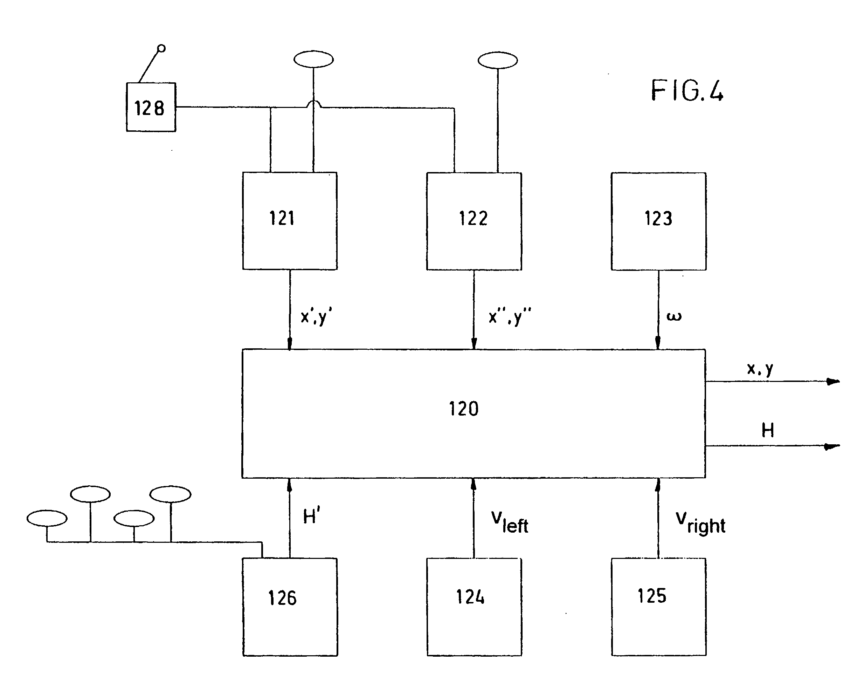

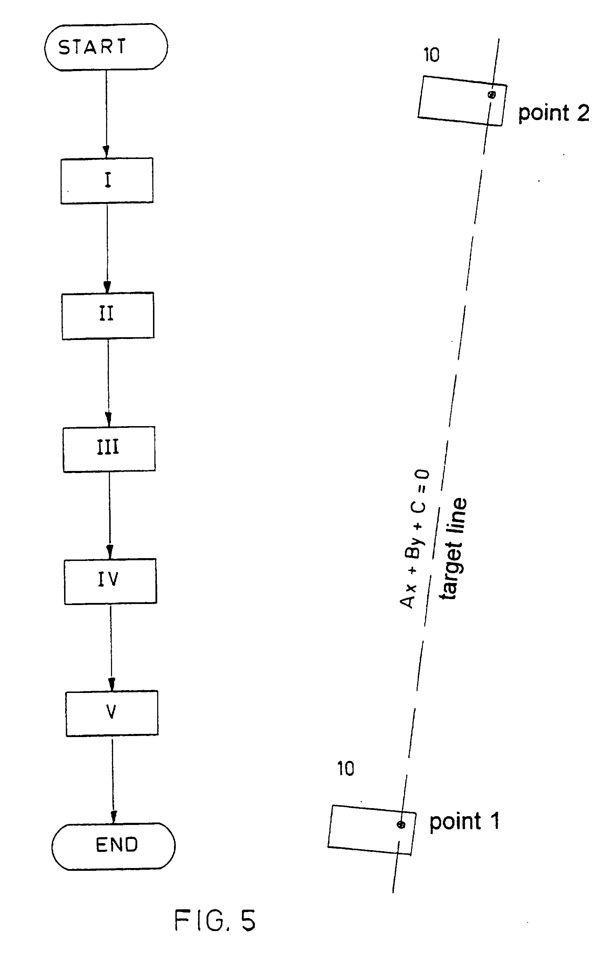

In Fig. 3, first, the operation of the automatic steering of a container handling machine is illustrated as a block diagram. First, the system comprises a block 101 for measurement of the location and heading of the machine, of which block a more detailed illustration will be given later as a block diagram in Fig. 4. The block 101 for measurement of the location and the heading provides the system with the information on the x,y location and on the direction H of the machine. In a container handling application, the location of height z of the machine is not varied to a substantial extent, and also the angles of inclination are very little, so that, in this connection, it is fully adequate to deal with the determination of the location and direction in one plane only. It is fully known that, when the location of one point x,y and the direction of the machine are known, the locations of all other points x,y of the machine can be computed. Further, the system includes a block 102 for storage of the direction and location of the machine, which block stores said location and direction when the control signals are activated, for example, by means of the keys 113,114 or by means of equivalent controls. The storage block 102 further computes the equations of the target lines of the machine, out of the stored locations, for example, in the way illustrated in the block diagram in Fig. 5. For the computing of one target line, the coordinates of just two points placed on the line are needed. If the line is not determined expressly on the basis of the point whose coordinates are obtained from the block 101 of measurement of location and heading, the data on the direction must be utilized possibly for computing the location of some other desired point of the machine. The storage block 102 stores the equations of the target lines in a data base or in the memory 103 of the computer. Since the target lines are straight running lines, the equation computed for each line can be presented in the form $Ax + By + C = 0$, wherein the invariables A, B and C are the parameters that define the line. The parameters can be computed, for example, by means of the following. equations:

$$H_{ref} = \arctan2(y_2 - y_1, x_2 - x_1) \tag{1}$$

$$A = \sin H_{ref} \tag{2}$$

$$B = -\cos H_{ref} \tag{3}$$

$$C = -(Ax_1 + By_1) \tag{4}$$

In the above formulas, $H_{ref}$ is the direction of the straight target line, and $x_1$, $y_1$ and $x_2$, $y_2$ are two points on the target line. Of course, the data base 103 can include equations of several different target lines, from among which the desired line is selected in each particular case. The target lines of the data base 103 can also be fed or stored numerically by means of a suitable programming device 109, for example a computer, or by means of a radio, for example by means of the modem 117 or an equivalent radio apparatus.

The system further includes a controller 104, which reads the equation of the target line from the data base 103 and which reads the location and the direction of the machine from the block 101 of measurement of location and heading. The controller 104 compares the location and the direction of the machine with the location and the direction of the target line and, based on this, controls the machine by means of the actuators 106 or other, corresponding actuators so that the machine remains on the desired line. The controller 104 also reads the desired speed of the machine either from the manual control 105 or from the computer 110 and attempts to drive the machine along the desired line at the desired speed. One possible mode of carrying out such a control is a what is called state feedback controller, which first computes the distance d of the vehicle from the straight line:

$$d = (Ax_0 + By_0 + C)/\sqrt{A^2 + B^2} \tag{5}$$

In the formula (5), $x_0$ and $y_0$ are the measured location of the point of the machine that is supposed to follow the target line. In an ideal case, the point is the same point as was used for teaching the target line. Next, the controller 104 attempts to control and to steer the machine with the desired path curvature k:

$$k = K1 \cdot d + K2 \cdot d_H \tag{6}$$

In the formula (6), $d_H$ refers to the difference between the running direction of the machine and the direction ($H_{ref}$) of the target line, and K1 and K2 are gain coefficients needed in order to tune the control. As is well known, in the case of most ground vehicles, the running direction of the machine and the direction of the frame of the machine are interlinked with each other via a kinematic equation, which can be derived. In particular in the case of a mobile gantry crane, when the wheels of the mobile gantry crane have been locked in the running position, the direction of the frame of the machine and the running direction of a point (or antenna) placed on the centre line A-A of the machine transverse to the running direction can be considered to be the same, with a sufficient precision.

After that, the computed path curvature is converted to steering signals for the actuators 106 of the machine. The conversion depends on the type of the actuators, of which possible types, in this particular case, a steering of a type for a mobile gantry crane and based on a difference in speed between the left-side wheel set and the right-side wheel set will be dealt with, which steering is similar, for example, to that of crawler vehicles, which are steered by slowing down or accelerating the left-side or the right-side wheel sets. The handling of vehicles and steering equipment of many other types is similar and does not cause any difference in the control method. For example, in the case of a straddle carrier for containers, the steering is based on the control of turning wheels 107, but the control method would be similar even in such a case.

In the case of a mobile gantry crane, the machine is steered by means of the wheel sets placed at the left and the right side of the machine and by means of the motor drives 106 of the wheel sets, by means of which drives the speeds ($v_{left}$ and $v_{right}$) of the left-side and the right-side wheel sets are controlled. In such a case, the desired path curvature is converted into set points of speed for the wheel sets, for example, by means of a pair of formulas:

$$v_{left} = v - Rkv \tag{7}$$

$$v_{right} = v + Rkv \tag{8}$$

In these formulas, v is the speed set point read by the controller 104, and R is the distance between the left-side wheel set and the right-side wheel set. In the case of a straddle carrier, the computed value of curvature would be converted into the desired turning angle of the turning wheels 107 by means of equations, which equations can be derived readily.

The computer 110 can be used for automation of container handling operations or even for full substitution for the driver if the object is to provide an unmanned container handling machine. The automatic movements controlled by the computer 110 can be divided into three categories in accordance with the principal movements of the container handling machines. These are (a) longitudinal running of the container handling machine, (b) transverse shifting 111 of the spreader, and (c) controlling 112 of the height of the spreader. These automatic operations can be accomplished as various combinations either to assist the driver or to substitute for the driver completely. The automatic operations can be controlled either by means of the radio 115 from the central computer, or the driver may control the operations, for example, one command at a time by means of a suitable hand controller 116.

In a longitudinal running operation of the container handling machine the computer 110 drives the container handling machine in the longitudinal direction to the correct location on the target line, from which the container to be fetched is to be picked up or where the container to be delivered is to be stacked or to any requested or pre-determined location whatsoever. In said operation of longitudinal running, the computer 110, of course, computes and gives the speed set point $v_{ref}$, in stead of a manual control 105. The computer 110 computes the required speed set point based on the target point $(x_{ref}, y_{ref})$, the target line (A,B,C) and, on the other hand, based on the measured location (x,y) of the machine. One possible mode of carrying out such a control is to use the proportional control method, in which the speed set point is computed as follows:

$$A_T = -B \tag{9}$$

$$B_T = A \tag{10}$$

$$C_T = -(Ax_{ref} + By_{ref}) \tag{11}$$

$$d = (A_T x + B_T y + C_T)\sqrt{A_T^2 + B_T^2} \tag{12}$$

$$v_{ref} = Kd \tag{13}$$

wherein $A_T$, $B_T$ and $C_T$ are the parameters of the normal line passing through the target point, and K is the gain coefficient of the proportional controller. The speed $v_{ref}$ is, of course, limited to a suitable value when the distance to the target point is large.

The computing of the target point is again often based on the known data on the location $(x_1, y_1)$ of the container or container slot to which the following operation is applied. In such case, the target point is computed based on the equation of the running line and on the coordinates $(x_1, y_1)$:

$$d = (Ax_1 + By_1 + C)/\sqrt{A^2 + B^2} \tag{14}$$

$$x_{ref} = x_1 - d \sin H_{ref} \tag{15}$$

$$y_{ref} = y_1 + d \cos H_{ref} \tag{16}$$

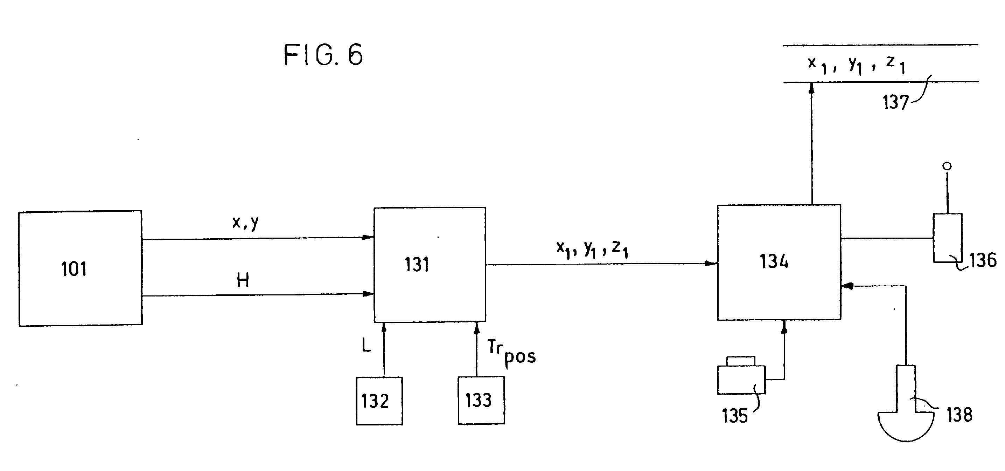

The precise locations of the containers and container slots placed in the area of containers can either be read by the computer 110 from the data base, whose maintenance will be described in more detail in the block diagram in Fig. 6, or, on the other hand, the computer 110 can receive the corresponding information by means of the radio, for example, from the central computer controlling the operation.

The target point can also be instructed for the system and measured by driving the machine to the location concerned and by storing the coordinates in the memory. A particular example of such a procedure is, in the case of a mobile gantry crane, a crossing point between the running paths, from which, for example, a mobile gantry crane can be transferred to transverse running in connection with a change of stack.

In the operation of transverse shifting of the spreader, the computer 110 runs the spreader of the container handling machine to the correct location in the transverse direction so that the spreader is placed precisely above the container to be picked up or that the spreader is placed above the location in which a new container is to be lowered, or to any requested or pre-determined location whatsoever in relation to a system of coordinates specifically fixed to the ground. In said operation of transverse shifting of the spreader, the computer 110, of course, controls the mechanism 111 of transverse shifting in stead of the driver. In the case of a mobile gantry crane, the mechanism of transverse shifting is a trolley 14 running on the bridge 13 (Figs. 1A and 1B), whereas, in the case of a straddle carrier for containers, the members for transverse shifting are particular side-shift cylinders. The computer 110 computes the value of required transverse shifting based on the measured location and direction (x, y, H) of the machine and based on the known data on the location $(x_1, y_1)$ of the container or container slot to which the following operation is applied, e.g., in accordance with the following formula:

$$HH = \arctan2(y_1 - y, x_1 - x) \tag{17}$$

$$D = \sqrt{(x_1\text{-}x)^2 + (y_1\text{-}y)^2} \tag{18}$$

$$\text{transverse shifting} = \text{---} \ D / \sin(H - HH) + \text{offset,} \tag{19}$$

wherein the offset is determined in accordance with the choice of the zero point of the transverse shifting.

The block diagram shown in Fig. 4 illustrates the operation of the block 101 of measurement of the location and heading of the machine as indicated in Fig. 3. The block 101 of measurement of location and heading makes use of measurements carried out by a number of sensors and combines said measurements in the computer 120 by using, for example, the Kalman filter method in itself known. All of the sensors shown in Fig. 4 are not indispensable for the operation, but they improve the accuracy of measurement. As was already pointed out several times above, one preferred mode of carrying out the system of invention and a device of measurement suitable for same is a GPS satellite positioning device 121, which reports the location x,y,z of the vehicle to the computer 120 at regular intervals with an accuracy of an order of a centimetre. When the machine moves, from successive measurements of the x, y location it is possible to compute the approximate direction of movement $H_v$ of the machine, e.g., by means of the formula:

$$H_v = \arctan2(y_2 - y_1, x_2 - x_1) \tag{20}$$

In the formula (20), $x_1, y_1$ and $x_2, y_2$ are two measurements taken close to one another from different places. As was already stated above, for example, in the case of a mobile gantry crane, the direction of movement $H_v$ of the machine is approximately the same as the direction of movement of a point placed on the centre line of the machine. The heading of the machine can also be determined by making use of two GPS devices 121,122, whose antennas are placed at different points on the machine. An increased distance between the antennas, of course, improves the accuracy of the measurement of direction. For the measurement of the heading, it is also possible to use a device 126 which operates with the GPS technique and is specifically designed for measurement of heading. Further sensors that are used commonly for measurement of heading include sensors of angular velocity, i.e. gyroscopes 123, of which in particular a fibre-optical gyroscope is suitable for the use meant in the present invention. In principle, a gyroscope 123 measures the turning velocity ($\omega$) in the direction of either one or several axes of rotation. Further, measurements of distance or speed 124,125 made from the tyres of the left and right side of the machine provide aid in the determination of the heading. In such a case, the turning velocity ($\omega$) of the machine can be determined by means of the formula:

$$\omega = (v_{right} - v_{left})/R \tag{21}$$

In the formula (21), R is the distance between the left and the right wheel set. One possible application of a Kalman filter in the computer 120 is the following:

$$dH/dt = \omega + K (H - H_v) \qquad (22)$$

In the formula (22), H is the estimated direction, and K is the amplifying factor used for tuning of the filter.

If the system of positioning employs one GPS antenna only, it is preferable to place the antenna on the transverse centre line A - A of the machine out of control-technical reasons. If the antenna were placed apart from the centre line, during running in one direction it would be placed in the rear part of the machine and, out of geometrical reasons, it would react to a turn of the vehicle initially in the inverse direction and would, thus, provide inverse information on the movements of the vehicle. In control theory, such a system is called a non-minimum-phase system, and, as is well known, its control and the tuning of the controller are problematic. Of course, the problem can be amended, for example, by, by means of computing, determining the location of a second point on the frame, which point is used for the control in stead of the location of the antenna proper. In such a case, however, some of the accuracy of measurement is lost, for an error present in the measurement of the direction of the vehicle causes an error in the location of the computed point. A second reason for fitting the antenna on the centre line A - A was already mentioned above: the direction of movement of the antenna then best corresponds to the direction of the frame of the machine also during a turning movement.

Fig. 5 illustrates the programming and teaching of the target line for the system. The programming can be carried out as five separate stages, of which in the first stage the driver of the machine drives the machine 10 to the first point, placed at the first end, of the target line. When the machine 10 is in the correct location and heading, in stage 2 the driver activates the key 113 shown in Fig. 3 or the corresponding control, by whose means the first point of the line is stored in the block 102 for storage of location and direction. In stage 3 the driver drives the machine to the second point placed at the other end of the target line. When the machine is again in the correct location and heading, in stage 4 the driver activates the key 114 or the corresponding control by whose means the second point of the target line is stored in the block 102 for storage of location and direction. In stage 5, based on the two points that have been stored, the computer computes the equation of the target line, for example, in compliance with the formulas given. In order that the best accuracy. could be achieved, these two points should be preferably placed as far from one another as possible. Further, it is obvious that the two points that are used do not restrict the length of the target line, for the equation of the straight line can also be computed to outside the points that are used. Changes in the direction of the machine do not interfere with the method to a significant extent, because, when a straight line is being run, the direction of the machine remains substantially unchanged.

It is a great advantage of the method that it is easy to use and that the driver of the machine can program the path himself. If desired, a path can be made even for temporary use only. Also, for example, if desired, the path can be moved slightly in the lateral direction in order to avoid wearing of the same lane. From the point of view of measurement technology, an advantage is obtained from the fact that all errors arising from alignment of the sensors or antennas are eliminated, for the teaching of the path is carried out by means of a device precisely equal to that used for running on the path. Owing to grooves formed into the running path, it is necessary to renew the pavement on the container field at,.certain intervals. Renewal of the pavement is expensive and slow, and therefore it is an important advantage provided by the invention that the formation of grooves becomes slower.

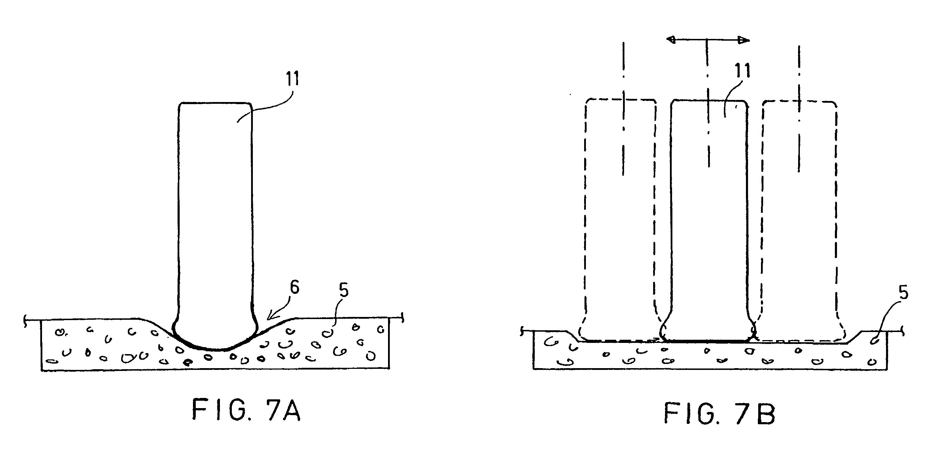

Attempts have been made to illustrate the situation by means of Figs. 7A and 7B. When the driver steers the container handling machine, on the average the wheels 11 of the vehicle follow the centre line of the running path. Similarly, when prior-art automatic steering systems are used, for example systems described in the description of the prior art, the wheels 11 of the container handling machine follow one running line. This has the consequence, as is supposed to be indicated by Fig. 7A, that the wheels 11 wear a groove 6 into the pavement 5 relatively rapidly. Thus, the pavement 5 has to be renewed over a certain width (of an order of 1 metre) relatively frequently.

The system in accordance with the invention is utilized in the way illustrated in Fig. 7B so that a program is fed into the steering system, which program controls the container handling machine, for example at certain time intervals, to run along a path placed, for example, by one width of the tyre to the side from the taught middle running line, as a result of which the wear of the pavement is reduced considerably, in which connection the interval of renewing the pavement can also be made longer. For this purpose, no fixed structures have to be erected in the terminal area, and no particular paintings of running lines have to be applied onto the field, but the variation of the running line is accomplished fully by means of programming so that the line can be changed even on a daily basis.

Finally, Fig. 6 illustrates utilization of the system in determination of the location of a container. The function of the system is to determine the location of a container with such a precision as is sufficient to identify the row, column and layer in which the container was left, or with a precision that is sufficient for picking up the container by means of a machine and, on the other hand, that a second container can be lowered onto a container by means of a machine. The accuracy of the identification of the row, column and layer of a container is typically of an order of $\pm$ 1 metre, and the accuracy adequate for picking up a container is of an order of $\pm$ 3...5 cm. A system that meets the first requirement can be used for the control and bookkeeping of a container storage field, whereas a system that meets the latter requirement can be used for automatic picking up and stacking of containers and for providing a mobile gantry crane possibly operating without a driver.

In Fig. 6, the block 101 is the block for measurement of the location and heading of the machine, which was already described earlier in relation to Figs. 3 and 4. When an accuracy of an order of $\pm$ 3 cm is considered as the target, it is obvious that in particular the accuracy required from the measurement of direction H is very high. In practice, in such a case, it is preferable to use two GPS antennas 121,122, as is illustrated in Fig. 4, for measurement of the direction, as fitted at opposite ends of the machine frame, in order to obtain the required accuracy reliably.

The block 131 connects the measurement of the location of the machine with the measurement of the transverse shifting 133 of the spreader and with the measurement of the height 132 of the spreader, in which case the location of the spreader in relation to the ground is known. In the case of a mobile gantry crane, the transverse shifting takes place by means of the trolley, whose location on the bridge can be determined with the required accuracy, for example, by means of a rotery encoder. In the case of a straddle carrier, the transverse shifting takes place by means of side-shift cylinders, whose length can be measured with the required accuracy, for example, by means of linear encoders. In the case of a mobile gantry crane, the information on height can be measured by using, for example, a rotary encoder, by whose means the length of the hoisting cable is measured. In the case of a straddle carrier, the information on height is likewise obtained, e.g., by measuring the length of the hoisting cable by means of a rotary encoder or, in the case of lifting by means of a cylinder, by measuring the length of the lifting cylinder, for example, by means of a linear encoder. The output of the block 131 is the coordinate $x_1$, $y_1$, $z_1$ of the location of the container when it is assumed that the container is suspended directly below the point $x_1$, $y_1$ of suspension. This assumption is justified in the case of a mobile gantry crane when the swaying movement of the container has stopped. The movement of the container is stopped in a mobile gantry crane provided with a modem anti-sway function within a very short time after stopping of the movement of the trolley. In the case of a straddle carrier, corresponding swaying of the load does not even occur.

The block 134 stores the location of the container at the moment when the container is stacked in its position. Thus, the stored coordinates state where the container was left and where it can be picked up again. On the other hand, from the stored reading it is also possible to compute to what location a container must be directed that is supposed to be stacked onto a container that was left. The information on when a container is stacked in its place can be obtained either so that the driver reports the delivery, for example, by means of the key 135, or automatically, for example based on the movement of the twistlocks 138. The information on the location of the container can be stored in the local data base 137, and it can also be transmitted by means of the radio 136 to a global data base. It should be noted that a number of steering systems accomplished with an alternative technique do not support container locating functions, for alternative systems often do not recognize the longitudinal location of the container handling device on the running line (compare a strip painted onto the ground).

Above, the system in accordance with the invention has been described by way of example with reference to the figures in the accompanying drawing. The invention is, however, not confined to the exemplifying embodiments shown in the figures alone, but different embodiments of the invention may show variation within the scope of the accompanying patent claims.

**Claims**

1. An automatic steering system for a container handling machine for the purpose of making a container handling machine, such as a mobile gantry crane (10), a straddle carrier, or equivalent, to move along straight lines determined by rows of containers or by a rail track or equivalent, which automatic steering system comprises a navigation system based on a satellite positioning system (GPS), which navigation system includes a stationary GPS apparatus mounted in a stationary ground station (21) and mobile GPS apparatuses (24) mounted on the container handling machines (10) moving in the nearby area, which GPS apparatuses are fitted to receive signals from the satellites of the GPS system so as to determine the locations of the GPS apparatuses, as well as radio apparatuses (23,25) mounted in the stationary ground station (21) and on the mobile container handling machines (10) so as to transmit a position-correcting signal from the radio transmitter (23) of the stationary ground station to the mobile radio receivers (25) of the container handling machines (10) in order to steer the container handling machine (10) to run along the desired running path in order to permit a transfer of containers, **characterized in that**, in order to avoid the wear grooves arising from the wheels (11) of the container handling devices (10) on the steering lines in the terminal field, the steering system of the container handling machine has been arranged, by means of programming, in stead of one steering line, to employ two or more steering lines placed side by side, within the scope of the width of the available steering lane.

2. A system as claimed in claim 1, **characterized in that** the steering system has been arranged to change the steering line automatically at desired intervals.

3. A system as claimed in claim 1 or 2, **characterized in that**, after a steering line has been taught or defined for the system and after the desired magnitude of transverse shifting has been given to the system, the system automatically defines the adjacent steering line.

4. A system as claimed in any of the preceding claims, **characterized in that** the automatic steering of the container handling machine (10) has been arranged to position the container handling machine (10) at the correct location in the direction of the row of containers in order to pick up or to stack a container (1) while making use of information concerning the precise xy location of the container stored in the memory and/or of information concerning the xy location of the container handling machine (10) measured by the system of navigation.

5. A system as claimed in any of the preceding claims, **characterized in that** the system is provided with a computer, by whose means the control of the container handling machines can be performed fully automatically without manual control.

6. A system as claimed in any of the preceding claims, **characterized in that** the container handling machines (10) are additionally provided with manual control and operating means.

**Patentansprüche**

1. Automatisches Steuerungssystem für eine Containerhandhabungsmaschine, um eine Containerhandhabungsmaschine wie zum Beispiel einen mobilen Portalkran (10), einen Stellagenträger oder ein Äquivalent dazu zu bringen, sich entlang gerader Linien zu bewegen, die durch eine Reihe von Containern oder durch ein Gleis oder ein Äquivalent bestimmt sind, wobei das automatische Steuerungssystem ein auf einem Satellitenpositionierungssystem (GPS) basierendes Navigationssystem umfasst, und das Navigationssystem ein stationäres GPS-Gerät hat, das in einer stationären Bodenstation (21) montiert ist, und bewegliche GPS-Geräte (24), die auf den Containerhandhabungsmaschinen (10) befestigt sind, die sich in den umgebenden Bereichen bewegen, wobei die GPS-Geräte angepasst sind, Signale von Satelliten des GPS-Systems zu empfangen, um so die Orte der GPS-Geräte zu definieren, als auch Funkgeräte (23, 25), die in der stationären Bodenstation (21) montiert sind, und auf den mobilen Containerhandhabungsmaschinen (10), um so ein Positionskorrektursignal von dem Funksender (21) zu der stationären Basisstation zu den beweglichen Funkempfängern (25) der Containerhandhabungsmaschinen (10) zu übertragen, um die Containerhandhabungsmaschine (10) zu steuern, entlang dem gewünschten Laufweg zu laufen, um eine Übertragung von Containern zu ermöglichen, **dadurch gekennzeichnet, dass** das Steuersystem der Containerhandhabungsmaschine mittels Programmierung angeordnet wurde, anstelle einer Steuerlinie, zwei oder mehr nebeneinander angeordnete Steuerlinien innerhalb des Breitenbereichs der verfügbaren Steuerspur einzusetzen, um Verschleißnuten zu vermeiden, die von den Rädern (11) der Containerhandhabungsvorrichtung (10) auf den Steuerlinien in dem Terminalfeld entstehen.

2. System nach Anspruch 1, **dadurch gekennzeichnet, dass** das Steuersystem angeordnet wurde, automatisch in erwünschten Zeitabständen zwischen den Steuerlinien zu wechseln.

3. System nach Anspruch 1 oder 2, **dadurch gekennzeichnet, dass**, das System automatisch die angrenzende Steuerlinie definiert, nachdem eine Steuerlinie für das System gelehrt oder definiert wurde, und nachdem dem System die gewünschte Anzahl von Querverschiebungen eingegeben wurde.

4. System nach jedem der vorangehenden Ansprüche, **dadurch gekennzeichnet, dass** die automatische Steuerung der Containerhandhabungsmaschine (10) angeordnet wurde, um die Containerhandhabungsmaschine (10) an dem korrekten Ort in der Richtung der Containerreihe zu positionieren, um einen Container (1) aufzunehmen oder zu stapeln, während eine Information verwendet wird, die den genauen xy-Ort des Containers betrifft, der im Speicher gespeichert ist und/oder eine Information die den xy-Ort der Containerhandhabungsmaschine (10) betrifft, die durch das Navigationssystem gemessen wurde.

**5.** System nach jedem der vorangehenden Ansprüche, **dadurch gekennzeichnet, dass** das System mit einem Computer bereitgestellt ist, durch den die Steuerung der Containerhandhabungsmaschine voll automatisch ohne manuelle Steuerung durchgeführt werden kann.

**6.** System nach jedem der vorangehenden Ansprüche, **dadurch gekennzeichnet, dass** die Containerhandhabungsmaschinen (10) zusätzlich mit einer manuellen Steuerungs- und Betätigungseinrichtung bereitgestellt sind.

**Revendications**

**1.** Système automatique de commande pour un dispositif de manutention de conteneurs ayant pour but de permettre à un dispositif de manutention de conteneurs, comme un portique roulant (10), un chariot cavalier ou analogue, de se déplacer le long de lignes droites déterminées par des rangées de conteneurs ou par une file de rails ou analogue, ledit système automatique de commande comprenant un équipement de radionavigation basé sur un système mondial de radiorepérage (GPS), ledit équipement de radionavigation comprenant un dispositif GPS stationnaire monté dans une station terrestre (21) stationnaire et des dispositifs GPS (24) mobiles montés sur les dispositifs (10) de manutention de conteneurs se déplaçant dans la zone voisine, lesdits dispositifs GPS étant équipés pour recevoir des signaux provenant des satellites du système GPS afin de déterminer les emplacements des dispositifs GPS, ainsi que des dispositifs radioélectriques (23, 25) montés dans la station terrestre (21) stationnaire et sur les dispositifs (10) mobiles de manutention de conteneurs pour transmettre un signal de correction de position de l'émetteur radioélectrique (23) de la station terrestre stationnaire vers les récepteurs radioélectriques (25) des dispositifs (10) de manutention de conteneurs afin de commander le déplacement du dispositif (10) de manutention de conteneurs le long de la voie désirée de roulement pour permettre un transfert des conteneurs, **caractérisé en ce que**, pour éviter l'apparition de rainures dues à l'usure sur les roues (11) des dispositifs (10) de manutention de conteneurs sur les lignes de commande dans le champ terminal, le système de commande du dispositif de manutention de conteneurs est agencé, par programmation, pour employer deux lignes de commande ou plus, au lieu d'une seule, placées côte à côte dans l'étendue de la largeur de la voie de commande disponible.

**2.** Système selon la revendication 1, **caractérisé en ce que** le système de commande est agencé pour changer automatiquement la ligne de commande à des intervalles désirés.

**3.** Système selon la revendication 1 ou 2, **caractérisé en ce que**, après qu'une ligne de commande a été apprise ou définie pour le système et après que le système a été soumis à l'amplitude désirée de décalage transversal, le système définit automatiquement la ligne de commande voisine.

**4.** Système selon l'une des revendications précédentes, **caractérisé en ce que** la commande automatique du dispositif (10) de manutention de conteneurs est agencée pour positionner le dispositif (10) de manutention de conteneurs à l'endroit correct dans la direction de la rangée de conteneurs pour prendre ou empiler un conteneur (1) tout en utilisant les informations relatives à l'emplacement xy précis du conteneur enregistrées dans la mémoire et/ou les informations relatives à l'emplacement xy du dispositif (10) de manutention de conteneurs mesurées par l'équipement de navigation.

**5.** Système selon l'une des revendications précédentes, **caractérisé en ce que** le système est muni d'un ordinateur, au moyen duquel la commande des dispositifs de manutention de conteneurs peut être exécutée de manière entièrement automatique sans commande manuelle.

**6.** Système selon l'une des revendications précédentes, **caractérisé en ce que** les dispositifs (10) de manutention de conteneurs sont en outre munis d'une commande manuelle et de moyens de manoeuvre.

EP 0 909 394 B1

FIG.1A

13

FIG.1B

EP 0 909 394 B1

FIG. 2

FIG. 3

FIG.4

EP 0 909 394 B1

START

I

II

III

IV

V

END

$Ax + By + C = 0$

target line

10

point 2

10

point 1

FIG. 5

FIG.6

FIG. 7A

FIG. 7B

EP 0 909 394 B1